(19) Europäisches Patentamt
European Patent Office
Office européen des brevets

(11) **EP 4 205 091 B1**

(12) **EUROPÄISCHE PATENTSCHRIFT**

(45) Veröffentlichungstag und Bekanntmachung des Hinweises auf die Patenterteilung:
**17.07.2024   Patentblatt 2024/29**

(21) Anmeldenummer: **21816347.5**

(22) Anmeldetag: **17.11.2021**

(51) Internationale Patentklassifikation (IPC):
***G07D 7/00*** *(2016.01)*

(52) Gemeinsame Patentklassifikation (CPC):
**G07D 7/003**

(86) Internationale Anmeldenummer:
**PCT/EP2021/081929**

(87) Internationale Veröffentlichungsnummer:
**WO 2022/106443 (27.05.2022 Gazette 2022/21)**

(54) **VORRICHTUNG ZUM ERZEUGEN EINER DIGITALEN KENNUNG VON EINEM MINDESTENS EIN DRUCKBILD AUFWEISENDEN EXEMPLAR EINES DRUCKERZEUGNISSES, SMARTPHONE ODER TABLET MIT DIESER VORRICHTUNG UND VERFAHREN ZUR VERWENDUNG DIESER VORRICHTUNG**

DEVICE FOR GENERATING A DIGITAL IDENTIFIER OF A COPY OF A PRINTED OBJECT, SAID COPY HAVING AT LEAST ONE PRINTED IMAGE, SMARTPHONE OR TABLET COMPRISING SAID DEVICE, AND METHOD FOR USING SAID DEVICE

PROCÉDÉ POUR PRODUIRE UN IDENTIFIANT NUMÉRIQUE D'UN EXEMPLAIRE D'UN PRODUIT D'IMPRESSION, LEDIT EXEMPLAIRE PRÉSENTANT AU MOINS UNE IMAGE D'IMPRESSION, TÉLÉPHONE INTELLIGENT OU TABLETTE DOTÉ(E) D'UN TEL DISPOSITIF ET PROCÉDÉ D'UTILISATION DE CE DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2020   DE 102020130444**

(43) Veröffentlichungstag der Anmeldung:
**05.07.2023   Patentblatt 2023/27**

(73) Patentinhaber: **Koenig & Bauer AG
97080 Würzburg (DE)**

(72) Erfinder:
• **GILLICH, Eugen
  33659 Bielefeld (DE)**
• **HOFFMANN, Jan Leif
  32756 Detmold (DE)**
• **EHLENBRÖKER, Jan-Friedrich
  32756 Detmold (DE)**
• **MÖNKS, Uwe
  32657 Lemgo (DE)**

(74) Vertreter: **Koenig & Bauer AG
- Lizenzen - Patente -
Friedrich-Koenig-Straße 4
97080 Würzburg (DE)**

(56) Entgegenhaltungen:
**WO-A2-2008/146262     US-A1- 2016 012 658**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Smartphone oder ein Tablet, jeweils aufweisend eine Vorrichtung zum Erzeugen einer digitalen Kennung von einem mindestens ein Druckbild aufweisenden Exemplar eines in einer Produktionsanlage hergestellten Druckerzeugnisses gemäß Anspruch 1, und Verfahren zur Verwendung dieser Vorrichtung gemäß den Ansprüchen 10 oder 11.

Durch die WO 2008/146262 A2 ist ein Verfahren zum Überprüfen der Authentizität von Sicherheitsdokumenten bekannt, insbesondere von Banknoten, wobei authentische Sicherheitsdokumente Sicherheitsmerkmale aufweisen, die auf den Sicherheitsdokumenten gedruckt, angebracht oder auf andere Weise bereitgestellt werden, wobei die Sicherheitsmerkmale charakteristische visuelle Merkmale aufweisen, die intrinsisch bei zur Erstellung der Sicherheitsdokumente angewandten Verfahren sind, wobei die Sicherheitsmerkmale Tiefdruckmuster, Linienversatzmuster, Buchdruckmuster, optisch diffraktive Strukturen und/oder Kombinationen davon umfassen, wobei das Verfahren die folgenden Schritte umfasst:

- Erfassen eines Beispielbildes von mindestens einem Bereich von Interesse der Oberfläche eines zu authentifizierenden Kandidatendokuments, wobei der Bereich von Interesse mindestens einen Teil eines der Sicherheitsmerkmale umfasst;
- digitales Verarbeiten des Beispielbildes durch Ausführen eines Zerlegens des Beispielbildes in mindestens einen Skalen-Teilraum, der hochaufgelöste Details des Beispielbildes enthält, und Extrahieren klassifizierender Merkmale aus dem Skalen-Teilraum, dessen extrahierte klassifizierende Merkmale für ein Positionieren des Kandidatendokuments in einem Merkmalsraum, der ein Klassifizieren des Kandidatendokuments ermöglicht, benutzt werden; und
- Ableiten einer Authentizitätsbewertung des Kandidatendokuments auf Basis der extrahierten klassifizierenden Merkmale und Positionieren des Kandidatendokuments im Merkmalsraum, wobei die digitale Verarbeitung des Beispielbildes umfasst:
- Ausführen einer Wavelet-Transformation des Beispielbildes zum Ableiten mindestens eines Satzes von Wavelet-Koeffizienten, die die hochaufgelösten Details des Beispielbildes in kleinem Maßstab darstellen; und
- Verarbeiten der Wavelet-Koeffizienten, um die klassifizierenden Merkmale zu extrahieren.

Durch die US 2016/0012658 A1 ist ein Verfahren zur Authentifizierung von Sicherheitsdokumenten, insbesondere Banknoten, bekannt. Dieses Verfahren basiert auf einer Analyse von intrinsischen Merkmalen der Sicherheitsdokumente, die durch Tiefdruck hergestellt werden, wobei die Analyse eine Zerlegung eines oder mehrerer Musterbilder von mindestens einem Teil eines in Frage kommenden zu authentifizierenden Dokuments basierend auf Wavelets einbezieht, wobei jedes Musterbild durch Durchführen einer Wavelet-Transformation des Musterbildes digital verarbeitet wird, um einen Satz von Klassifizierungsmerkmalen abzuleiten, der eine Klassifizierung des in Frage kommenden Dokuments innerhalb eines mehrdimensionalen Merkmalsraums (f) ermöglicht, wobei das Verfahren auf einem adaptiven Wavelet-Ansatz basiert, wobei der adaptive Wavelet-Ansatz u. a. den Schritt aufweist, vor dem Ausführen der Wavelet-Transformation eine Kategorisierungskarte (C-Karte) mit lokalen Informationen über unterschiedliche Tiefdrucklinienstrukturen, die auf den Sicherheitsdokumenten zu finden sind, zu definieren.

Durch die EP 2 639 774 A1 ist ein Verfahren zum Erfassen von Sicherheitsmerkmalen bekannt, die auf Sicherheitsdokumenten gedruckt, angebracht oder anderweitig bereitgestellt werden, wobei die Sicherheitsmerkmale kennzeichnende visuelle Merkmale aufweisen, die intrinsisch bei zur Herstellung der Sicherheitsdokumente angewandten Verfahren sind, wobei das Verfahren die folgenden Schritte umfasst:

- Erfassen eines Beispielbildes von mindestens einem Bereich von Interesse der Oberfläche eines Kandidatendokuments, wobei der Bereich von Interesse so ausgewählt ist, dass er mindestens einen Teil der Sicherheitsmerkmale enthält;
- digitales Verarbeiten des Beispielbildes, wobei das digitale Verarbeiten Ausführen einer oder mehrerer Iterationen einer Multiskalenanalyse des Beispielbildes zum Extrahieren klassifizierender Merkmale, die die Sicherheitsmerkmale kennzeichnen und die zum Positionieren des Kandidatendokuments in einem Merkmalsraum, der ein Klassifizieren des Kandidatendokuments ermöglicht, benutzt werden; und Positionieren des Kandidatendokuments im Merkmalsraum auf Basis der extrahierten klassifizierenden Merkmale, wobei die klassifizierenden Merkmale statistische Parameter sind, die ausgewählt sind aus der Gruppe umfassend das arithmetische Mittel (erstes Moment in der Statistik), die Varianz (zweites Moment in der Statistik), die Schiefe (drittes Moment in der Statistik), die Wölbung (viertes Moment in der Statistik) und die Entropie der statistischen Verteilung von spektralen Koeffizienten, die hochaufgelöste Details des Beispielbildes in kleinem Maßstab darstellen, wobei die Sicherheitsmerkmale Tiefdruckmuster sind, wobei die Sicherheitsdokumente Banknoten sind.

Durch die US 2009/074301 A1 ist bekannt, Druckeigenschaften zu erkennen, die sich auf ein bestimmtes Druckgerät beziehen.

Im Folgenden soll unter einem Druckerzeugnis ein auf technischem Wege hergestelltes Erzeugnis verstanden werden, wobei dieses Erzeugnis auf einer Fläche seines Substrates mindestens ein Druckbild aufweist. Das betreffende Druckbild weist seinerseits i. d. R. mehrere Bildelemente auf, die sich in ihrer Häufigkeit und Ausrichtung von Kontrastübergängen sowie den unterschiedlichen jeweiligen Intensitäten des von ihnen jeweils reflektierten Lichts vorzugsweise voneinander unterscheiden. Die Bildelemente des jeweiligen Druckbildes können in unterschiedlichen Geometrien ausgebildet sein. Das jeweilige Substrat des Druckerzeugnisses ist z. B. durch einen Papierwerkstoff oder durch einen Kunststoff oder durch einen metallischen Werkstoff ausgebildet.

Ein Wertdruckprodukt ist eine spezielle Gattung eines Druckerzeugnisses, wobei ein Wertdruckprodukt einen ökonomischen Wert verkörpert. Wertdruckprodukte sind z. B. Banknoten, Postwertzeichen oder Steuermarken, wobei jedes dieser genannten Beispiele jeweils eine bestimmte Unterart von Wertdruckprodukten, d. h. dieser speziellen Gattung von Druckerzeugnissen bezeichnet. Obwohl Wertdruckprodukte durch in diese Produkte integrierte drucktechnische Sicherheitsmerkmale wie u. a. einem fühlbaren Relief, einem Sicherheitsfaden oder einem Hologramm und/oder durch elektronische Sicherheitsmerkmale wie z. B. einem integrierten Sicherheitschip ein sehr hohes Maß an Fälschungssicherheit aufweisen, gelangen dennoch immer wieder Fälschungen von Wertdruckprodukten in Umlauf.

Ein Wertdruckprodukt gilt dann als echt, wenn seine Produktion auf einer hoheitlich autorisierten Produktionsanlage erfolgt ist. Eine davon abweichende Produktion eines Wertdruckproduktes ist eine kriminelle Handlung, die von staatlichen Stellen systematisch untersucht und geahndet wird. Unter einer Produktionsanlage wird hier eine drucktechnische Vorrichtung einschließlich aller ihrer Einrichtungen und/oder Hilfsmittel verstanden, die zur Produktion eines Wertdruckproduktes verwendet werden. Fälschungen von Wertdruckprodukten werden häufig mittels einer drucktechnischen Vorrichtung produziert, die in einem Rasterdruckverfahren wie z. B. in einem Laserdruckverfahren oder in einem Inkjetdruckverfahren oder in einem Offsetdruckverfahren druckt, wohingegen auf einer hoheitlich autorisierten Produktionsanlage produzierte Wertdruckprodukte auf ihrem Substrat nahezu ausnahmslos mindestens ein in einem Stahlstichdruckverfahren, insbesondere in einem Intagliodruckverfahren gedrucktes Druckbild aufweisen. Andere Druckverfahren wie z. B. die vorgenannten Rasterdruckverfahren werden bei echten Wertdruckprodukten gegebenenfalls nur zusätzlich zum Stahlstichdruckverfahren verwendet.

Ein in einem Stahlstichdruckverfahren gedrucktes Druckbild zeichnet sich durch hohe Konturenschärfe und Detailtreue aus und hat zwischen seinen Bildelementen einen Kontrast, der in seiner Intensität mit anderen Druckverfahren wie z. B. den zuvor genannten Rasterdruckverfahren zumindest bislang unerreicht ist. Dabei variiert die Intensität des Kontrastes auch in Abhängigkeit von der Stärke des im Stahlstichdruckverfahren verwendeten mechanischen Druckes, so dass Produktionsanlagen, wenngleich sie auch alle jeweils in einem Stahlstichdruckverfahren Wertdruckprodukte produzieren mögen, zufolge ihrer konstruktionsbedingt zumeist unterschiedlichen mechanischen Drücke durch die Intensität des von ihnen im Druckbild erzeugten Kontrastes voneinander unterscheidbar und damit identifizierbar sind.

Unter Kontrast wird im Allgemeinen ein Unterschied von Helligkeiten zwischen zwei Bildelementen verstanden. Maschinell auswertbar wird der zwischen Bildelementen eines Druckbildes bestehende Kontrast dadurch, dass eine z. B. als ein Scanner oder als eine Halbleiterkamera ausgebildete optoelektronische Erfassungseinrichtung die Bildelemente des betreffenden Druckbildes des zu untersuchenden Druckerzeugnisses erfasst und eine aus mehreren diskreten Bildpunkten bestehende Abbildung dieses Druckbildes in Form von digitalen Bilddaten erstellt. Diese digitalen Bilddaten weisen für die Bildpunkte der betreffenden Abbildung jeweils zumindest einen Wert für dessen jeweilige Helligkeitsintensität auf und können bei Bedarf z. B. um einen Wert für einen Farbton und/oder einen Wert für eine Farbsättigung ergänzt werden, wobei die genannten Farbeigenschaften Farbton und Farbsättigung neben der Helligkeit zu den drei vom Menschen als grundlegend empfundenen Eigenschaften einer wahrgenommenen Farbe gehören. In einer zumindest die jeweilige Helligkeitsintensität der Bildpunkte aufweisenden Abbildung besteht ein zwischen verschiedenen Bildpunkten bestehender Kontrast in einem betragsmäßigen Unterschied zwischen der Helligkeitsintensität eines helleren, insbesondere hellsten Bildpunktes und der Helligkeitsintensität eines dunkleren, insbesondere dunkelsten Bildpunktes.

Auf technischem Wege, insbesondere in einer industriellen Produktion hergestellte Druckerzeugnisse werden im Regelfall in einer Serienfertigung produziert, wobei die in einer bestimmten Serie produzierten Exemplare des betreffenden Druckerzeugnisses nach ihrem Inverkehrbringen in einen Wirtschaftsraum zumeist ganz unterschiedliche Wege nehmen. Ferner sind insbesondere bei Wertdruckprodukten zumeist unterschiedliche Nominalwerte vorgesehen. Zum Beispiel existiert bei Banknoten einer in Umlauf befindlichen Währung eine durch staatlichen Hoheitsakt festgelegte Stückelung. Echte Wertdruckprodukte eines bestimmten Nominalwertes werden ebenso wie ihre Fälschungen im Regelfall in einer Serienfertigung produziert. Bei einer solchen Serienfertigung werden durch eine gleichzeitige oder unmittelbar aufeinander folgende Produktion mehrere insbesondere hinsichtlich ihres Nominalwertes gleichartige Exemplare des betreffenden Wertdruckproduktes produziert. Während ihres Umlaufs nehmen diese auf einer bestimmten Produktionsanlage gleichzeitig oder unmittelbar aufeinander folgend produzierten Exemplare des betreffenden Wertdruckproduktes im Wirtschaftsraum unterschiedliche Wege, so dass insbesondere gefälschte Exemplare des betreffenden Wertdruckproduktes einer bestimmten Serienfertigung an ganz unterschiedlichen Orten aufgegriffen und auch von unterschiedlichen staatlichen Stellen unabhängig voneinander einer forensischen Untersuchung zugeführt werden.

Allerdings besteht nicht nur bei Wertdruckprodukten das Bedürfnis, die jeweilige Identität von Exemplaren eines bestimmten Druckerzeugnisses zu ermitteln und anhand objektiver Kriterien nachzuweisen. Mit dem Begriff der Identität von Exemplaren eines Druckerzeugnisses ist hier eine Gesamtheit von Eigenschaften gemeint, anhand derer im Regelfall alle Exemplare eines bestimmten Druckerzeugnisses möglichst eindeutig identifizierbar sind. Der Nachweis der jeweiligen Identität von Exemplaren eines bestimmten Druckerzeugnisses gelingt jedoch zumeist bereits schon anhand einer Kennung des betreffenden Druckerzeugnisses, wobei unter einer Kennung nur ein Teil der die Identität bildenden Eigenschaften, d. h. ausgewählte Eigenschaften eines Druckerzeugnisses verstanden werden soll. Des Weiteren bezeichnet eine digitale Kennung mit einer Recheneinheit ermittelbare Eigenschaften von Exemplaren des betreffenden Druckerzeugnisses, die deren automatisierte Identifizierung ermöglichen. Die Identität eines Druckerzeugnisses und/oder dessen Kennung können jeweils z. B. in Form eines Musters ausgebildet sein, wobei das jeweilige Muster eine Struktur bezeichnet, die durch erneutes oder paralleles gleichförmiges Auftreten von Merkmalen gekennzeichnet ist.

Der Erfindung liegt die Aufgabe zugrunde, ein Smartphone oder ein Tablet, jeweils aufweisend eine Vorrichtung zum Erzeugen einer digitalen Kennung von einem mindestens ein Druckbild aufweisenden Exemplar eines in einer Produktionsanlage hergestellten Druckerzeugnisses, und Verfahren zur Verwendung dieser Vorrichtung zu schaffen, um das betreffende Exemplar des Druckerzeugnisses anhand seiner Kennung eindeutig identifizierbar zu machen.

Die Aufgabe wird erfindungsgemäß durch die Merkmale des Anspruches 1 sowie 10 oder 11 gelöst. Die jeweils abhängigen Ansprüche betreffen jeweils vorteilhafte Ausgestaltungen und/oder Weiterbildungen der gefundenen Lösung.

Die mit der Erfindung erzielbaren Vorteile bestehen insbesondere darin, dass ein mindestens ein Druckbild aufweisendes Exemplar eines Druckerzeugnisses anhand seiner aus Helligkeitsintensitäten von Bildpunkten erzeugten Kennung eindeutig identifizierbar ist. Das jeweilige Exemplar des betreffenden Druckerzeugnisses ist anhand seiner Kennung objektiv allein auf der Grundlage technischer Kriterien bzw. Merkmale, insbesondere anhand intrinsischer, d. h. dem jeweiligen Druckerzeugnis typspezifisch innewohnender Merkmale, identifizierbar und anschließend auch z. B. einer bestimmten Produktionsserie zuordenbar. Dabei umfasst eine Produktionsserie diejenigen Exemplare eines bestimmten Druckerzeugnisses, die in bzw. mit derselben Produktionsanlage produziert worden sind. Die objektive und eindeutige Zuordnung von Exemplaren eines Druckerzeugnisses zu einer bestimmten Produktionsserie anhand ihrer jeweiligen Kennung ermöglicht ferner eine automatische Kategorisierung der Exemplare des betreffenden Druckerzeugnisses in Gruppen. Durch die automatische Kategorisierung der Exemplare des betreffenden Druckerzeugnisses werden Fehlzuordnungen und/oder eine falsche Kategorisierung dieser Exemplare des betreffenden Druckerzeugnisses z. B. in echte und gefälschte Exemplare vermieden. Die genannten Fehler sind solche, die bei einer manuellen Prüfung und Beurteilung infolge menschlicher und damit subjektiver Faktoren erfahrungsgemäß unvermeidbar vorkommen und zum Teil erhebliche Folgeaufwendungen generieren. Auch die Kategorisierung der Exemplare des betreffenden Druckerzeugnisses kann mittels der gefundenen Lösung vollständig automatisiert durchgeführt werden.

Ein Ausführungsbeispiel der Erfindung ist in den Zeichnungen dargestellt und wird im Folgenden näher beschrieben.

Es zeigen:

Fig. 1 Eine Abbildung eines Druckerzeugnisses und dessen Segmentierung;

Fig. 2 Eine tabellarische Darstellung von Schritten, die eine Extraktion von Merkmalen aus einem Feld der Abbildung des Druckerzeugnisses betreffen;

Fig. 3 Eine Darstellung einer bildlichen Repräsentation einer erzeugten Kennung;

Fig. 4 Eine Darstellung von Gruppen, denen verschiedene geprüfte Exemplare eines Druckerzeugnisses zugeordnet sind.

Eine Vorrichtung zum Erzeugen einer digitalen Kennung von einem mindestens ein Druckbild aufweisenden Exemplar eines Druckerzeugnisses weist zumindest eine optoelektronische Erfassungseinrichtung auf, wobei die optoelektronische Erfassungseinrichtung das mindestens eine Druckbild von dem betreffenden Exemplar des Druckerzeugnisses erfasst und aus dem erfassten Druckbild eine aus einer Vielzahl von diskreten Bildpunkten bestehende Abbildung erstellt und für jeden dieser Bildpunkte zumindest dessen Helligkeitsintensität ermittelt. Außerdem weist diese Vorrichtung zum Erzeugen einer digitalen Kennung des mindestens ein Druckbild aufweisenden Exemplars des betreffenden Druckerzeugnisses eine mit der optoelektronischen Erfassungseinrichtung zusammenwirkende die Helligkeitsintensitäten der Bildpunkte auswertende Einrichtung auf, wobei diese Einrichtung derart ausgebildet ist, dass sie die Abbildung des Druckbildes vom aktuell abgebildeten Exemplar des betreffenden Druckerzeugnisses flächendeckend in mehrere jeweils aus Bildpunkten dieser Abbildung bestehende Felder segmentiert und jedes dieser Felder mit einer auf das abgebildete Druckbild des betreffenden Druckerzeugnisses bezogenen Positionsinformation versieht. Diese Einrichtung ist zudem derart ausgebildet ist, dass sie in jedem dieser jeweils aus Bildpunkten der aktuellen Abbildung bestehenden Felder von benachbarten Bildpunkten eine Differenz in ihren jeweiligen von der optoelektronischen Erfassungseinrichtung ermittelten Helligkeitsintensitäten ermittelt und die aus den Helligkeitsintensitäten benachbarter Bildpunkte ermittelten Differenzen in Form einer Häufigkeitsverteilung darstellt und in der jeweiligen Häufigkeitsverteilung einen Mittelwert und eine auf den jeweiligen Mittelwert bezogene Standardabweichung sowie eine Schiefe und eine Wölbung der jeweiligen Häufigkeitsverteilung berechnet. Ferner ist diese Einrichtung auch derart ausgebildet, dass sie in einem mit dieser Einrichtung zusammenwirkenden Speicher von allen Feldern der segmentierten aktuellen Abbildung des Druckbildes des betreffenden Druckerzeugnisses die jeweilige Positionsinformation eines jeden Feldes zusammen mit der für das jeweilige Feld jeweils berechneten Standardabweichung und Schiefe und Wölbung als die digitale Kennung des betreffenden Exemplars des Druckerzeugnisses speichert.

Das Druckerzeugnis ist z. B. als ein Wertdruckprodukt ausgebildet, insbesondere als eine Banknote oder als ein Postwertzeichen oder als eine Steuermarke oder als ein Ausweisdokument. Das jeweilige Exemplar des betreffenden Druckerzeugnisses weist ein Substrat auf, welches z. B. aus einem Papierwerkstoff oder aus einem Kunststoff oder aus einem metallischen Werkstoff oder aus einer Kombination dieser Werkstoffe gebildet ist. Das jeweilige Exemplar des betreffenden Druckerzeugnisses weist auf seinem Substrat insbesondere eine in einem Stahlstichdruckverfahren gedruckte Fläche auf und/oder kann auch eine z. B. in einem Rasterdruckverfahren wie z. B. in einem Laserdruckverfahren oder in einem Inkjetdruckverfahren oder in einem Offsetdruckverfahren gedruckte Bildelemente aufweisen. Das jeweilige Exemplar des betreffenden Druckerzeugnisses weist z. B. mindestens ein drucktechnisches Sicherheitsmerkmal auf wie ein taktiles, d. h. ein fühlbares Relief oder einen Sicherheitsfaden oder ein Hologramm. Alternativ oder zusätzlich kann das jeweilige Exemplar des betreffenden Druckerzeugnisses ein elektronisches Sicherheitsmerkmal wie z. B. einem integrierten Sicherheitschip aufweisen.

Die optoelektronische Erfassungseinrichtung ist z. B. als ein Scanner oder als eine Kamera, insbesondere als eine Halbleiterkamera, z. B. als eine Zeilenkamera oder als eine Flächenkamera ausgebildet. Die mit der optoelektronischen Erfassungseinrichtung zusammenwirkende die Helligkeitsintensitäten der Bildpunkte auswertende Einrichtung ist vorzugsweise als eine digitale Recheneinheit ausgebildet, insbesondere als eine einen Mikroprozessor aufweisende Recheneinheit. Die mit der optoelektronischen Erfassungseinrichtung zusammenwirkende Einrichtung ist derart ausgebildet, dass sie das aktuell abgebildete Exemplar des betreffenden Druckerzeugnisses anhand seiner Kennung identifiziert und vorzugsweise auch einer bestimmten Produktionsserie dieses Druckerzeugnisses zuordnet. Die mit der optoelektronischen Erfassungseinrichtung zusammenwirkende Einrichtung kann darüber hinaus auch derart ausgebildet sein, dass sie das aktuell abgebildete Exemplar des betreffenden Druckerzeugnisses anhand seiner Kennung einer von mehreren verschiedenen Gruppen zuordnet, wobei diese Gruppen innerhalb einer Menge von Exemplaren dieses Druckerzeugnisses gebildet sind und vor Aufnahme der Produktion dieses Druckerzeugnisses festgelegt wurden. Im Regelfall ergibt sich eine Gruppe aus den als echt geltenden Exemplaren des betreffenden Druckerzeugnisses sowie je eine Gruppe über Druckerzeugnisse gleichen Aussehens, die sich hinsichtlich ihrer Produktionsart von den übrigen Gruppen hinreichend unterscheidet. Exemplare des betreffenden Druckerzeugnisses, die nicht zweifelsfrei einer bestehenden Gruppe, d. h. einer der vorgenannten Gruppen zugeordnet werden können, lassen sich einer von den vorgenannten Gruppen verschiedenen für diese Zweifelsfälle vorgesehenen Gruppe zuweisen, wobei für die dieser letzteren Gruppe zugeordneten Exemplare des betreffenden Druckerzeugnisses eine weitere Prüfung notwendig ist. Die mit der optoelektronischen Erfassungseinrichtung zusammenwirkende Einrichtung ist vorteilhafterweise derart ausgebildet, dass sie die Erzeugung der digitalen Kennung und gegebenenfalls auch die jeweilige Zuordnung des aktuell abgebildeten Exemplars des betreffenden Druckerzeugnisses vollständig automatisiert ausführt.

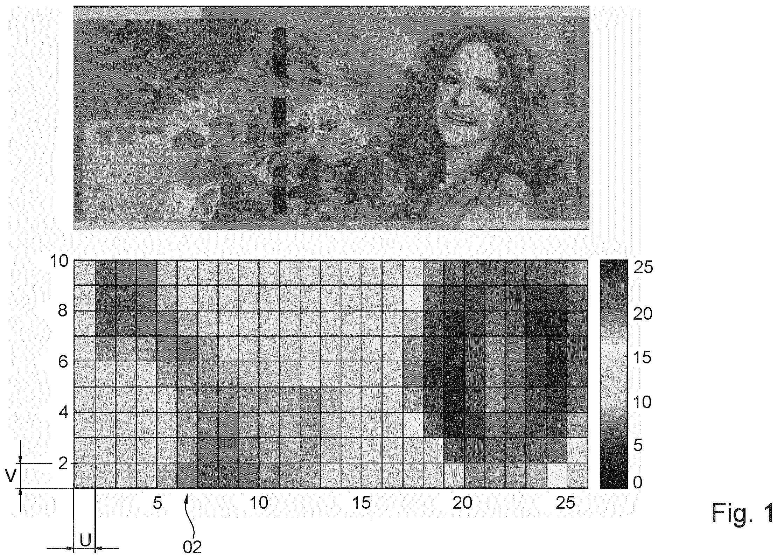

Die mit der optoelektronischen Erfassungseinrichtung zusammenwirkende Einrichtung ist z. B. derart ausgebildet ist, dass diese Einrichtung die Abbildung des Druckbildes vom aktuell abgebildeten Exemplar des betreffenden Druckerzeugnisses flächendeckend in mehrere jeweils aus Bildpunkten dieser Abbildung bestehende rechteckige Felder 02 gleicher Größe segmentiert, wie es in der Fig. 1 am Beispiel einer Banknote 01 dargestellt ist. In einer besonders vorteilhaften Ausführungsform ist vorgesehen, dass die mit der optoelektronischen Erfassungseinrichtung zusammenwirkende Einrichtung zueinander benachbarte die Abbildung des Druckbildes des aktuell abgebildeten Exemplars des betreffenden Druckerzeugnisses segmentierende Felder 02 jeweils überlappend anordnet. Die mit der optoelektronischen Erfassungseinrichtung zusammenwirkende die Helligkeitsintensitäten der Bildpunkte auswertende Einrichtung ist z. B. derart ausgebildet, dass sie die aus den von der optoelektronischen Erfassungseinrichtung ermittelten Helligkeitsintensitäten ermittelte Häufigkeitsverteilung vorzugsweise für jedes der die aktuelle Abbildung des Druckbildes segmentierenden Felder 02 jeweils als ein zweidimensionales Helligkeitsprofil darstellt. Optional ist eine mit der die Helligkeitswerte der Bildpunkte auswertenden Einrichtung zusammenwirkende Anzeigeeinrichtung vorgesehen, z. B. ein vorzugsweise grafikfähiger Monitor oder ein entsprechendes Display, wobei diese Anzeigeeinrichtung die von der die Helligkeitsintensitäten der Bildpunkte auswertenden Einrichtung, z. B. von der digitalen Recheneinheit erzeugte digitale Kennung des jeweiligen Exemplars des betreffenden Druckerzeugnisses anzeigt, und zwar vorzugsweise in Form einer grafischen und/oder alphanumerischen Anzeige.

Die Vorrichtung zum Erzeugen einer digitalen Kennung von einem mindestens ein Druckbild aufweisenden Exemplar eines Druckerzeugnisses ist z. B. in einem elektronischen Gerät, vorzugsweise in einem mobilen Endgerät, insbesondere in einem Smartphone oder Tablet angeordnet. In einer vorteilhaften Ausbildung der Erfindung ist ein eine Kamera und ein Display sowie einen Mikroprozessor aufweisendes Smartphone oder Tablet der ausgebildet, dass es eine digitale Kennung von einem mindestens ein Druckbild aufweisenden Exemplar eines Druckerzeugnisses erzeugt und dass es dementsprechend verwendet werden kann.

Im Folgenden werden die zuvor beschriebenen von der mit der optoelektronischen Erfassungseinrichtung zusammenwirkenden die Helligkeitsintensitäten der Bildpunkte auswertenden Einrichtung zum Erzeugen der digitalen Kennung auszuführenden Schritte an einem Beispiel erläutert. Dabei wird als zu prüfendes Druckerzeugnis ohne Beschränkung darauf beispielhaft eine Banknote 01 gewählt.

Im ersten Schritt wird eine Segmentierung der Abbildung der von der optoelektronischen Erfassungseinrichtung aufgenommenen Banknote 01 durchgeführt (Fig. 1). Dazu wird die Abbildung in rechteckige, z. B. quadratische, vorzugsweise überlappende Segmente 02 - oder auch Felder 02 genannt - aufgeteilt, wobei jedes dieser Felder 02 orthogonale Kanten U; V mit einem Kantenmaß von jeweils mehreren, z. B. 400 Bildpunkten aufweist. Vorzugsweise werden sodann die einzelnen Segmente 02 längs ihrer jeweiligen beiden orthogonalen Kanten U; V in mehrere, z. B. in drei gleichbreite streifenförmige Bereiche mit z. B. 400 / 3 = 133 Bildpunkten unterteilt. Benachbarte Felder 02 sind also z. B. jeweils um ein Drittel zueinander versetzt angeordnet und überlappen in diesem Beispiel jeweils zu zwei Dritteln. Anschließend wird jedes einzelne Feld 02 z. B. mit einer stationären Wavelet-Transformation (SWT) transformiert. Die resultierenden Detailkoeffizienten für horizontale, vertikale und diagonale Strukturen werden zu cG-Detailkoeffizienten aggregiert. So werden alle detektierten Strukturübergänge eines Ausschnitts bzw. Feldes 02 der betreffenden Banknote 01 in einer cG-Detailkoeffizientenmatrix zusammengefasst. Anschließend wird gemäß folgender Formel eine normierte diskrete Wahrscheinlichkeitsdichte der Wavelet-Koeffizienten in Form eines Histogramms H erzeugt:

$$H_n(p) = [1 \, / \, (N \, * \, M)] \, * \, H(p)$$

mit p für die Amplitude der Wavelet-Detailkoeffizienten sowie N für die Anzahl der Zeilen und M für die Anzahl der Spalten der cG-Detailkoeffizientenmatrix.

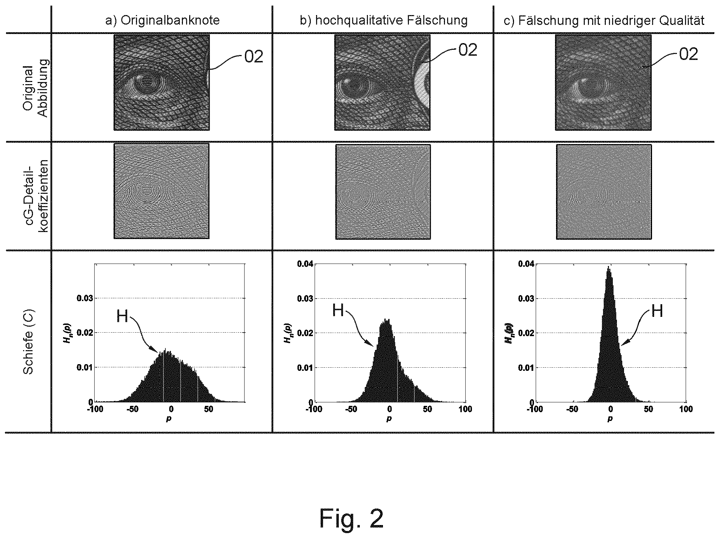

In der Fig. 2 sind in Form von Eintragungen in einer Tabelle einige Schritte, die eine Extraktion von Merkmalen aus einem beispielhaft ausgewählten Feld 02 der von der optoelektronischen Einrichtung erstellten Abbildung der Banknote 01 betreffen, sowie daraus resultierende Ergebnisse in einem direkten Vergleich dargestellt. So werden in der ersten Reihe der Fig. 2 aus z. B. drei verschiedenen Banknoten 01 extrahierte, miteinander vergleichbare Felder 02 gezeigt, und zwar in der ersten Spalte (a) das betreffende Feld 02 einer Originalbanknote, in der mittleren Spalte (b) das betreffende Feld 02 einer qualitativ hochwertigen Fälschung und in der dritten Spalte (c) das betreffende Feld 02 einer Fälschung mit niedriger Qualität. Die zweite Reihe der Fig. 2 zeigt die aggregierten cG-Detailkoeffizienten. Aus der Darstellung der cG-Detailkoeffizienten lässt sich bei allen Transformationen ein Unterschied zwischen der Originalbanknote und den Fälschungen erkennen. Während die Kanten in der Abbildung des gewählten Feldes 02 der Originalbanknote scharf herausstechen, sind die entsprechenden Abbildungen in den Feldern 02 der Fälschungen verschwommen und teilweise kaum wieder zu erkennen.

In der dritten Reihe der Fig. 2 sind die jeweilige Häufigkeitsverteilung der cG-Detailkoeffizienten für die Originalbanknote und für die Fälschungen in einzelnen Histogrammen H veranschaulicht. Es ist ersichtlich, dass sich die Häufigkeitsverteilung z. B. von Grauwerten in der Abbildung des gewählten Feldes 02 der Originalbanknote in ihrer Form deutlich von der jeweiligen Form der Fälschungen unterscheidet. Aufgrund der stärker ausgeprägten Kanten enthält das Histogramm H einer in der Originalbanknote enthaltenen durch ein Intagliodruckverfahren erzeugten Struktur mehr hochfrequente Anteile. Das die Originalbanknote betreffende Histogramm H ist insgesamt flachgipfliger. Bei Fälschungen treten signifikant weniger hochfrequente Anteile auf, sodass niedrigere Frequenzbeträge dominieren und das Histogramm H gegenüber dem einer Originalbanknote steilgipfliger ausfällt. Durch die Berechnung von in der Bildverarbeitung üblichen statistischen Merkmalen, vorzugsweise der Varianz, der Schiefe und der Wölbung, kann eine globale Aussage über die Bildstruktur getroffen werden.

Dabei beschreibt die Varianz die Streuung der Amplituden p der Wavelet-Detailkoeffizienten um den arithmetischen Mittelwert $\overline{I} = \sum p \, * \, H_n(p)$, wobei der arithmetische Mittelwert $\overline{I}$ ein erstes Moment in der Statistik bildet. Die Varianz bildet dann das zweite Moment in der Statistik. Formelmäßig ist die Varianz wie folgt darstellbar:

$$\sigma^2 = \Sigma(p - \overline{I})^2 \, * \, H_n(p)$$

Die Schiefe eines Histogramms H (engl. Skewness), die auch als das dritte Moment in der Statistik bezeichnet wird, gibt den Grad der Asymmetrie einer Verteilung an. Die Schiefe beschreibt den Grad der Abweichung einer Histogrammverteilung von der Gaußschen Normalform. Weicht die Verteilung nach links ab, ist die Schiefe positiv, weicht sie nach rechts ab, ist die Schiefe negativ. Man kann auch sagen, dass die Schiefe die Symmetrie der Häufigkeitsverteilung um den Mittelwert $\overline{I}$ und damit eine horizontale Abweichung widerspiegelt. Formelmäßig ist die Schiefe wie folgt darstellbar:

$$E = (1/\sigma^3) * \Sigma(p - \overline{I})^3 * H_n(p)$$

Die Wölbung (engl. Exzess) bildet das vierte Moment in der Statistik. Die Wölbung ist ein Maß für die Steilheit der Verteilung. Dieses Maß beschreibt, ob die Amplituden p der Wavelet-Koeffizienten steil oder flach um das Zentrum verteilt sind. Ist der Exzess positiv, so läuft die Verteilung steiler als die Normalverteilung zu. Es wird deshalb von einer steilgipfligen Verteilung gesprochen. Bei negativem Exzess ist die Verteilung flacher als die Normalverteilung und es wird daher als flachgipflige Verteilung bezeichnet. Die Wölbung gibt die Abweichung der aktuellen Häufigkeitsverteilung von einer Normalverteilung und damit eine vertikale Abweichung wieder. Formelmäßig ist die Wölbung wie folgt darstellbar:

$$C = (1/\sigma^4) * (\Sigma(p - \overline{I})^4 * H_n(p)) - 3$$

Zusammenfassend spiegeln die in den vorgenannten Schritten berechneten Merkmale die Schärfe der jeweiligen zu untersuchenden Abbildung wider. Insbesondere das zweite Moment in der Statistik, d. h. die Varianz, gilt als Indikator für den Schärfegrad einer Abbildung, wobei die Strukturkanten in der jeweiligen Abbildung umso schärfer sind, je höher der Wert der Varianz ist.

In einer bevorzugten Ausführung der Erfindung ist die gattungsgemäße Vorrichtung derart ausgebildet, dass in einem nächsten Schritt eine Kategorisierung der untersuchten Banknote 01 auf Basis der digitalen Kennung erfolgt. Dafür werden die drei Merkmalswerte Varianz, Schiefe und Wölbung zum Erzeugen der eindeutigen Kennung für das jeweilige Segment 02 bzw. Feld 02 verwendet. Die Kombination der jeweiligen Merkmalswerte aller Segmente 02 einer Banknote 01 mit einer Information über die Verortung des jeweiligen Segmentes 02 innerhalb der betreffenden Banknote 01, d. h. mit einer Positionsinformation, bildet eine dreidimensionale Charakterisierung dieser Banknote 01 in Form einer dreidimensionalen Matrix, wobei diese dreidimensionale Charakterisierung bzw. Matrix auch als digitaler Fingerabdruck des betreffenden Druckerzeugnisses 01, hier einer Banknote 01, bezeichnet wird. Diese dreidimensionale Charakterisierung bzw. Matrix des betreffenden Druckerzeugnisses 01 bildet dessen zu erzeugende digitale Kennung.

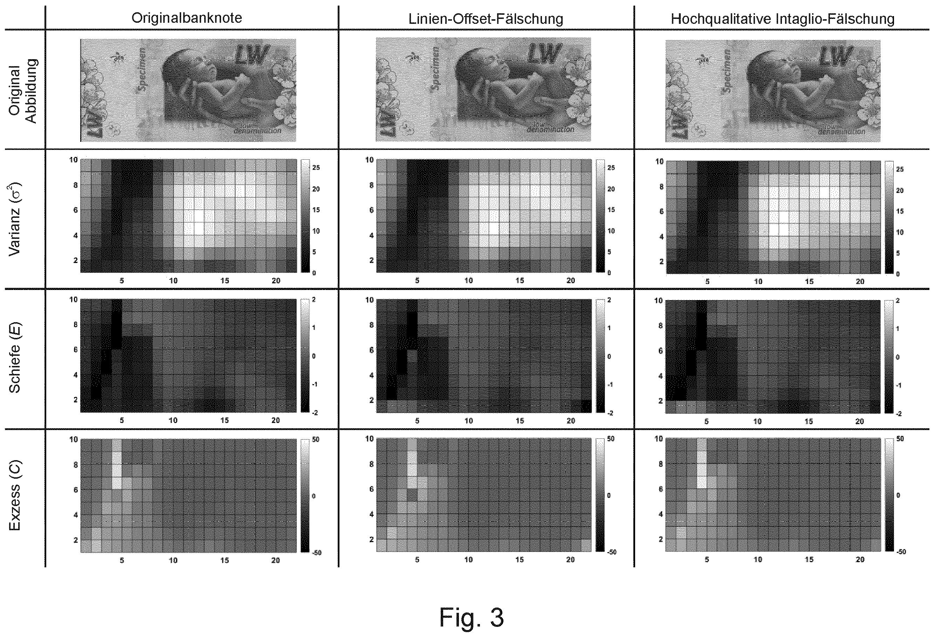

Fig. 3 zeigt beispielhaft in einer Tabelle für eine Originalbanknote und für zwei Fälschungen, z. B. einer Linien-Offset-Fälschung und einer hochqualitativen Intaglio-Fälschung, in einem Vergleich eine bildliche Repräsentation von deren jeweils erzeugter Kennung, jeweils bestehend aus den Merkmalen Varianz, Schiefe und Wölbung.

Zur besseren Darstellbarkeit zeigt die Fig. 3 die jeweils dreidimensionale Charakterisierung der als Beispiel gewählten Banknoten 01 als drei separate Grauwertmatrizen, die jeweils zwischen den Werten 0 und 255 entsprechend den Minima respektive den Maxima eingefärbt sind. Aus der Fig. 3 ist ersichtlich, dass die Struktur der einzelnen Grauwertmatrizen in Bezug auf das jeweilige Merkmal jeweils durchaus ähnlich ist. Vergleicht man dagegen die einzelnen Grauwertmatrizen paarweise zwischen der Originalbanknote und ihren Fälschungen, so fällt auf, dass sich die Werte der Merkmale deutlich voneinander unterscheiden, wenngleich in den Grauwertmatrizen der Varianz für alle Banknoten 01 die durch das Hauptmotiv verursachten Diskontinuitäten in der Abbildung gut zu beobachten sind.

Auf der Basis der digitalen Kennung, d. h. des Fingerabdrucks, können Banknoten 01 miteinander verglichen werden. Es gibt verschiedene Möglichkeiten, die Ähnlichkeit zwischen Fingerabdrücken von zwei Banknoten 01 zu bestimmen. Eine dieser Möglichkeiten ist z. B. eine in der Recheneinheit durchgeführte Berechnung von Korrelationskoeffizienten. Dabei wird zunächst ein Korrelationskoeffizient zwischen den einzelnen Fingerabdruckmatrizen bestimmt, damit für jede Merkmalsmatrix ein Ähnlichkeitsgrad ermittelt werden kann. Im Falle der in der Fig. 3 beispielhaft gezeigten Merkmalsmatrizen würden sich drei Korrelationswerte $corr\sigma_2$, $corrE$, $corrC$ ergeben. Schließlich wird ein Ähnlichkeitswert zwischen zwei Banknoten 01 durch eine geeignete Aggregation dieser drei Korrelationswerte $corr\sigma_2$, $corrE$, $corrC$ bestimmt. So ergibt sich z. B. der Ähnlichkeitsgrad aus der gleichmäßigen Gewichtung der einzelnen Korrelationskoeffizienten zu

$$corr_{all} = (corr\sigma_2 + corrE + corrC) / 3.$$

Darüber hinaus kann auf der Grundlage der erzeugten digitalen Kennung für Exemplare des betreffenden, z. B. als Banknote 01 ausgebildeten Druckerzeugnisses 01 eine Kategorisierung der Fälschungen z. B. in Falschgeldklassen vorgenommen werden. Zu diesem Zweck wird die zu untersuchende Banknote 01 nicht mit einer anderen Banknote 01, sondern mit einem Modell einer digitalen Kennung von einer Fälschungsklasse verglichen. Ferner lässt sich mit beliebigen Konstrukten eine digitale Kennung, d. h. ein Fingerabdruck einer Fälschungsklasse modellieren. Eine dieser Möglichkeiten ist eine regionenbezogene Mittelwertbildung aller Fingerabdrücke der Banknoten 01, die zu der jeweiligen Falschgeldklasse gehören.

Das vorstehende Ausführungsbeispiel hat aufgezeigt, wie eine digitale Kennung, d. h. ein sogenannter digitaler Fingerabdruck eines Exemplars eines Druckerzeugnisses erzeugt werden kann. Durch die Berechnung von Korrelationskoeffizienten zwischen den jeweiligen digitalen Kennungen verschiedener Exemplare des betreffenden Druckerzeugnisses lässt sich ein Ähnlichkeitsgrad zwischen den betreffenden Exemplaren bestimmen.

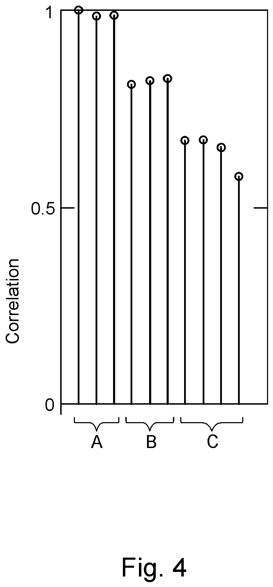

Auf dieser Basis kann eine Kategorisierung bzw. Unterteilung der Exemplare des betreffenden Druckerzeugnisses in Gruppen erfolgen, wobei bei Banknoten 01 diese Kategorisierung insbesondere in Abhängigkeit von ihrem Nominalwert und dem verwendeten Druckverfahren durchgeführt wird. Exemplare des betreffenden Druckerzeugnisses, die nach dem gleichen Druckverfahren hergestellt worden sind, haben eine ähnliche digitale Kennung, wohingegen Exemplare des betreffenden Druckerzeugnisses, die auf voneinander verschiedenen Produktionsanlagen hergestellt wurden, anhand ihrer jeweiligen digitalen Kennung deutlich unterscheidbar sind. Ein Beispiel für den drei Gruppen A; B; C anhand von Korrelationskoeffizienten zugeordnete Exemplare des betreffenden Druckerzeugnisses zeigt die Fig. 4.

Mit Hilfe der vorgeschlagenen Vorrichtung zum Erzeugen einer digitalen Kennung von einem mindestens ein Druckbild aufweisenden Exemplar eines Druckerzeugnisses ist es auch möglich, eine Klassifizierung von Fälschungen zu realisieren. Des Weiteren kann die beschriebene Lösung als Unterstützung bei der Herstellung und/oder der Aufdeckung von Verbindungen zwischen einzelnen (digitalen) Fälschungen verwendet werden, die an verschiedenen Standorten sichergestellt wurden.

Bei Bedarf können zusätzlich zu einer Auswertung der Helligkeitsintensitäten von Bildpunkten weitere physikalische Merkmale in die Auswertung einbezogen werden. So können z. B. erkannte Rasterfrequenzen, Informationen über die jeweiligen Farbspektren der einzelnen Druckfarben, eine Information über die Farbrasteranordnung und/oder die resultierenden Farbspektren innerhalb eines Segmentes 02 bzw. Feldes 02 als mindestens ein weiteres Kriterium für eine bessere Charakterisierung der Exemplare eines Druckerzeugnisses, insbesondere von Banknoten 01, herangezogen werden.

Mit der beschriebenen Vorrichtung lässt sich somit ein Verfahren mit allen genannten Schritten ausführen, um ein Exemplar eines betreffenden Druckerzeugnisses anhand seiner Kennung eindeutig identifizierbar zu machen.

Insbesondere ergibt sich ein Verfahren zur Verwendung der zuvor beschriebenen Vorrichtung, wobei diese Vorrichtung dazu verwendet wird, eine digitale Kennung von einem mindestens ein Druckbild aufweisenden Exemplar eines als ein Wertdruckprodukt in Form einer Banknote oder eines Postwertzeichens oder einer Steuermarke oder eines Ausweisdokumentes ausgebildeten Druckerzeugnisses zu erzeugen.

Auch ergibt sich ein Verfahren zur Verwendung der zu beschreibenden Vorrichtung, wobei diese Vorrichtung dazu verwendet wird, eine digitale Kennung von einem solchen mindestens ein Druckbild aufweisenden Exemplar eines als ein Wertdruckprodukt ausgebildeten Druckerzeugnisses zu erzeugen, bei dem das betreffende Exemplar des Druckerzeugnisses ein aus einem Papierwerkstoff oder aus einem Kunststoff oder aus einem metallischen Werkstoff gebildetes Substrat aufweist. Dabei wird diese Vorrichtung vorzugsweise dazu verwendet, eine digitale Kennung von einem solchen mindestens ein Druckbild aufweisenden Exemplar eines als ein Wertdruckprodukt ausgebildeten Druckerzeugnisses zu erzeugen, bei dem das betreffende Exemplar des Druckerzeugnisses auf seinem Substrat eine in einem Stahlstichdruckverfahren gedruckte Fläche aufweist. Alternativ oder zusätzlich wird diese Vorrichtung dazu verwendet, eine digitale Kennung von einem solchen mindestens ein Druckbild aufweisenden Exemplar eines als ein Wertdruckprodukt ausgebildeten Druckerzeugnisses zu erzeugen, bei dem das betreffende Exemplar des Druckerzeugnisses mindestens ein drucktechnisches Sicherheitsmerkmal in Form eines fühlbaren Reliefs und/oder eines Sicherheitsfadens und/oder eines Hologramms aufweist. Ferner kann diese Vorrichtung dazu verwendet werden, eine digitale Kennung von einem solchen mindestens ein Druckbild aufweisenden Exemplar eines als ein Wertdruckprodukt ausgebildeten Druckerzeugnisses zu erzeugen, bei dem das betreffende Exemplar des Druckerzeugnisses ein elektronisches Sicherheitsmerkmal in Form eines integrierten Sicherheitschips aufweist.

Bezugszeichenliste

| | |
|---|---|
| 01 | Exemplar eines Druckerzeugnisses; Banknote |
| 02 | Segment; Feld |
| | |
| A | Gruppe |
| B | Gruppe |
| C | Gruppe |
| H | Histogramm |
| U | Kante |
| V | Kante |

**Patentansprüche**

1. Smartphone oder Tablet, aufweisend eine Vorrichtung zum Erzeugen einer digitalen Kennung von einem mindestens ein Druckbild aufweisenden Exemplar eines in einer Produktionsanlage hergestellten Druckerzeugnisses,

a. mit einer optoelektronischen Erfassungseinrichtung, wobei die optoelektronische Erfassungseinrichtung derart ausgebildet ist,

a.a. dass sie das mindestens eine Druckbild von dem betreffenden Exemplar des Druckerzeugnisses erfasst und aus dem erfassten Druckbild eine aus einer Vielzahl von diskreten Bildpunkten bestehende Abbildung erstellt und für jeden dieser Bildpunkte zumindest dessen Helligkeitsintensität ermittelt,

b. und mit einer mit der optoelektronischen Erfassungseinrichtung zusammenwirkenden die Helligkeitsintensitäten der Bildpunkte auswertenden Einrichtung, wobei diese Einrichtung derart ausgebildet ist,

b.a. dass sie die Abbildung des Druckbildes vom aktuell abgebildeten Exemplar des betreffenden Druckerzeugnisses flächendeckend in mehrere jeweils aus Bildpunkten dieser Abbildung bestehende Felder segmentiert,

b.b. dass sie jedes dieser Felder mit einer auf das abgebildete Druckbild des betreffenden Druckerzeugnisses bezogenen Positionsinformation versieht,

b.c. dass sie in jedem dieser jeweils aus Bildpunkten der aktuellen Abbildung bestehenden Felder von benachbarten Bildpunkten eine Differenz in ihren jeweiligen von der optoelektronischen Erfassungseinrichtung ermittelten Helligkeitsintensitäten ermittelt und die aus den Helligkeitsintensitäten benachbarter Bildpunkte ermittelten Differenzen in Form einer Häufigkeitsverteilung darstellt und in der jeweiligen Häufigkeitsverteilung einen Mittelwert und eine auf den jeweiligen Mittelwert bezogene Standardabweichung sowie eine Schiefe und eine Wölbung der jeweiligen Häufigkeitsverteilung berechnet, und

b.d. dass sie in einem mit dieser Einrichtung zusammenwirkenden Speicher von allen Feldern der segmentierten aktuellen Abbildung des Druckbildes des betreffenden Druckerzeugnisses die jeweilige Positionsinformation eines jeden Feldes zusammen mit der für das jeweilige Feld jeweils berechneten Standardabweichung und Schiefe und Wölbung als die digitale Kennung des betreffenden Exemplars des Druckerzeugnisses speichert,

b.e. dass sie Exemplare des betreffenden Druckerzeugnisses, die auf voneinander verschiedenen Produktionsanlagen hergestellt wurden, anhand ihrer jeweiligen digitalen Kennung unterscheidet,

b.f. dass sie das aktuell abgebildete Exemplar des betreffenden Druckerzeugnisses anhand seiner Kennung einer bestimmten Produktionsserie dieses Druckerzeugnisses zuordnet, wobei eine Produktionsserie diejenigen Exemplare eines bestimmten Druckerzeugnisses umfasst, die in oder mit derselben Produktionsanlage produziert worden sind,

b.g. dass eine mit der die Helligkeitswerte der Bildpunkte auswertenden Einrichtung zusammenwirkende Anzeigeeinrichtung vorgesehen ist, wobei diese Anzeigeeinrichtung die von der die Helligkeitsintensitäten der Bildpunkte auswertenden Einrichtung erzeugte digitale Kennung des jeweiligen Exemplars des betreffenden Druckerzeugnisses in Form einer grafischen und/oder alphanumerischen Anzeige anzeigt.

2. Smartphone oder Tablet nach Anspruch 1, **dadurch gekennzeichnet, dass** die mit der optoelektronischen Erfassungseinrichtung zusammenwirkende Einrichtung derart ausgebildet ist, dass sie das aktuell abgebildete Exemplar des betreffenden Druckerzeugnisses anhand seiner Kennung identifiziert.

3. Smartphone oder Tablet nach Anspruch 1 oder 2, **dadurch gekennzeichnet, dass** die mit der optoelektronischen Erfassungseinrichtung zusammenwirkende Einrichtung derart ausgebildet ist, dass sie das aktuell abgebildete Exemplar des betreffenden Druckerzeugnisses anhand seiner Kennung kategorisiert, indem sie das aktuell abgebildete Exemplar des betreffenden Druckerzeugnisses einer von mehreren verschiedenen Gruppen zuordnet, wobei diese Gruppen innerhalb einer Menge von Exemplaren dieses Druckerzeugnisses gebildet sind und vor Aufnahme der Produktion dieses Druckerzeugnisses festgelegt wurden.

4. Smartphone oder Tablet nach Anspruch 1 oder 2 oder 3, **dadurch gekennzeichnet, dass** die mit der optoelektronischen Erfassungseinrichtung zusammenwirkende Einrichtung derart ausgebildet ist, dass sie die Erzeugung der digitalen Kennung und/oder die jeweilige Zuordnung des aktuell abgebildeten Exemplars des betreffenden Druckerzeugnisses vollständig automatisiert ausführt.

5. Smartphone oder Tablet nach Anspruch 1 oder 2 oder 3 oder 4, **dadurch gekennzeichnet, dass** die mit der optoelektronischen Erfassungseinrichtung zusammenwirkende Einrichtung derart ausgebildet ist, dass sie die Abbildung des Druckbildes des aktuell abgebildeten Exemplars des betreffenden Druckerzeugnisses flächendeckend in mehrere jeweils aus Bildpunkten dieser Abbildung bestehende rechteckige Felder gleicher Größe segmentiert.

6. Smartphone oder Tablet nach Anspruch 1 oder 2 oder 3 oder 4 oder 5, **dadurch gekennzeichnet, dass** die mit der optoelektronischen Erfassungseinrichtung zusammenwirkende Einrichtung derart ausgebildet ist, dass sie zueinander benachbarte die Abbildung des Druckbildes des aktuell abgebildeten Exemplars des betreffenden Druckerzeugnisses segmentierende Felder jeweils überlappend anordnet.

7. Smartphone oder Tablet nach Anspruch 1 oder 2 oder 3 oder 4 oder 5 oder 6, **dadurch gekennzeichnet, dass** die mit der optoelektronischen Erfassungseinrichtung zusammenwirkende Einrichtung derart ausgebildet ist, dass sie die aus den von der optoelektronischen Erfassungseinrichtung ermittelten Helligkeitsintensitäten ermittelte Häufigkeitsverteilung für jedes der die aktuelle Abbildung des Druckbildes segmentierenden Felder jeweils als ein zweidimensionales Helligkeitsprofil darstellt.

8. Smartphone oder Tablet nach Anspruch 1 oder 2 oder 3 oder 4 oder 5 oder 6 oder 7, **dadurch gekennzeichnet, dass** die optoelektronische Erfassungseinrichtung als ein Scanner oder als eine Halbleiterkamera ausgebildet ist.

9. Smartphone oder Tablet nach Anspruch 1 oder 2 oder 3 oder 4 oder 5 oder 6 oder 7 oder 8, **dadurch gekennzeichnet, dass** die mit der optoelektronischen Erfassungseinrichtung zusammenwirkende die Helligkeitsintensitäten der Bildpunkte auswertende Einrichtung als eine digitale Recheneinheit ausgebildet ist.

10. Verfahren zur Verwendung des die Vorrichtung nach Anspruch 1 oder 2 oder 3 oder 4 oder 5 oder 6 oder 7 oder 8 oder 9 aufweisenden Smartphones oder Tablets, **dadurch gekennzeichnet, dass** diese Vorrichtung dazu verwendet wird, eine digitale Kennung von einem mindestens ein Druckbild aufweisenden Exemplar eines als ein Wertdruckprodukt in Form einer Banknote oder eines Postwertzeichens oder einer Steuermarke oder eines Ausweisdokumentes ausgebildeten Druckerzeugnisses zu erzeugen.

11. Verfahren zur Verwendung des die Vorrichtung nach Anspruch 1 oder 2 oder 3 oder 4 oder 5 oder 6 oder 7 oder 8 oder 9 aufweisenden Smartphones oder Tablets, **dadurch gekennzeichnet, dass** diese Vorrichtung dazu verwendet wird, eine digitale Kennung von einem solchen mindestens ein Druckbild aufweisenden Exemplar eines als ein Wertdruckprodukt ausgebildeten Druckerzeugnisses zu erzeugen, bei dem das betreffende Exemplar des Druckerzeugnisses ein aus einem Papierwerkstoff oder aus einem Kunststoff oder aus einem metallischen Werkstoff gebildetes Substrat aufweist.

12. Verfahren nach Anspruch 11, **dadurch gekennzeichnet, dass** diese Vorrichtung dazu verwendet wird, eine digitale Kennung von einem solchen mindestens ein Druckbild aufweisenden Exemplar eines als ein Wertdruckprodukt ausgebildeten Druckerzeugnisses zu erzeugen, bei dem das betreffende Exemplar des Druckerzeugnisses auf seinem Substrat eine in einem Stahlstichdruckverfahren gedruckte Fläche aufweist.

13. Verfahren nach Anspruch 10 oder 11 oder 12, **dadurch gekennzeichnet, dass** diese Vorrichtung dazu verwendet wird, eine digitale Kennung von einem solchen mindestens ein Druckbild aufweisenden Exemplar eines als ein Wertdruckprodukt ausgebildeten Druckerzeugnisses zu erzeugen, bei dem das betreffende Exemplar des Druckerzeugnisses mindestens ein drucktechnisches Sicherheitsmerkmal in Form eines fühlbaren Reliefs und/oder eines Sicherheitsfadens und/oder eines Hologramms aufweist.

14. Verfahren nach Anspruch 10 oder 11 oder 12 oder 13, **dadurch gekennzeichnet, dass** diese Vorrichtung dazu verwendet wird, eine digitale Kennung von einem solchen mindestens ein Druckbild aufweisenden Exemplar eines als ein Wertdruckprodukt ausgebildeten Druckerzeugnisses zu erzeugen, bei dem das betreffende Exemplar des Druckerzeugnisses ein elektronisches Sicherheitsmerkmal in Form eines integrierten Sicherheitschips aufweist.

## Claims

1. Smartphone or tablet, comprising a device for generating a digital identifier of a copy, including at least one print image, of a printed product produced in a production system,

   a. comprising an optoelectronic detection device, the optoelectronic detection device being configured
   a.a. so as to detect the at least one print image of the relevant copy of the printed product and, from the detected print image, create a representation composed of a multiplicity of discrete pixels and so as to ascertain at least the brightness intensity for each of these pixels,
   b. and comprising a unit cooperating with the optoelectronic detection device and evaluating the brightness intensities of the pixels, this unit being configured

b.a. so as to comprehensively segment the representation of the print image of the currently represented copy of the relevant printed product into multiple fields that are each composed of pixels of this representation,

b.b. so as to provide each of these fields with a piece of position information that is based on the represented print image of the relevant printed product,

b.c. so as to ascertain, in each of these fields of adjoining pixels which are each composed of pixels of the current representation, a difference in their respective brightness intensities ascertained by the optoelectronic detection device, and so as to display the differences, ascertained from the brightness intensities of adjoining pixels, in the form of a frequency distribution, and so as to calculate, in the respective frequency distribution, a mean value and a standard deviation that is based on the respective mean value, as well as a skewness and a kurtosis of the respective frequency distribution, and

b.d. so as to store for all fields of the segmented current representation of the print image of the relevant printed product, in a memory cooperating with this unit, the respective piece of position information of each field, together with the standard deviation calculated in each case for the respective field, as well as skewness and kurtosis, as the digital identifier of the relevant copy of the printed product,

b.e. so as to distinguish copies of the relevant printed product, which were produced on differing production equipment, based on their respective digital identifier,

b.f. so as to assign the currently represented copy of the relevant printed product based on its identifier to a certain production series of this printed product, wherein a production series comprises those copies of a particular printed product which were produced in or with the same production equipment,

b.g. such that a display device cooperating with the unit that evaluates the brightness values of the pixels is provided, this display device displaying the digital identifier, generated by the unit that evaluates the brightness intensities of the pixels, of the respective copy of the relevant printed product in the form of a graphical and/or alphanumerical display.

2. Smartphone or tablet according to claim 1, **characterized in that** the unit cooperating with the optoelectronic detection device is configured so as to identify the currently represented copy of the relevant printed product based on its identifier.

3. Smartphone or tablet according to claim 1 or 2, **characterized in that** the unit cooperating with the optoelectronic detection device is configured so as to categorize the currently represented copy of the relevant printed product based on its identifier by assigning the currently represented copy of the relevant printed product to one of several different groups, these groups being formed within a set of copies of this printed product and having been established before production of this printed product started.

4. Smartphone or tablet according to claim 1 or 2 or 3, **characterized in that** the unit cooperating with the optoelectronic detection device is configured so as to carry out the generation of the digital identifier and/or the respective assignment of the currently represented copy of the relevant printed product in a completely automated manner.

5. Smartphone or tablet according to claim 1 or 2 or 3 or 4, **characterized in that** the unit cooperating with the optoelectronic detection device is configured so as to comprehensively segment the representation of the print image of the currently represented copy of the relevant printed product into multiple rectangular fields that have the same size and are each composed of pixels of this representation.

6. Smartphone or tablet according to claim 1 or 2 or 3 or 4 or 5, **characterized in that** the unit cooperating with the optoelectronic detection device is configured so as to arrange, in an overlapping manner, adjoining fields that segment the representation of the print image of the currently represented copy of the relevant printed product.

7. Smartphone or tablet according to claim 1 or 2 or 3 or 4 or 5 or 6, **characterized in that** the unit cooperating with the optoelectronic detection device is configured so as to display the frequency distribution, which is ascertained from the brightness intensities ascertained by the optoelectronic detection device, for each of the fields segmenting the current representation of the print image as a two-dimensional brightness profile.

8. Smartphone or tablet according to claim 1 or 2 or 3 or 4 or 5 or 6 or 7, **characterized in that** the optoelectronic detection device is configured as a scanner or as a semiconductor camera.

9. Smartphone or tablet according to claim 1 or 2 or 3 or 4 or 5 or 6 or 7 or 8, **characterized in that** the unit cooperating with the optoelectronic detection device and evaluating the brightness intensities of the pixels is configured as a digital processing unit.

10. Method for using the smartphone or tablet comprising the device according to claim 1 or 2 or 3 or 4 or 5 or 6 or 7 or 8 or 9, **characterized in that** this device is used to generate a digital identifier of a copy, including at least one print image, of a printed product that is embodied as a value printed product in the form of a banknote or a postal stamp or a revenue mark or an identification document.

11. Method for using the smartphone or tablet comprising the device according to claim 1 or 2 or 3 or 4 or 5 or 6 or 7 or 8 or 9, **characterized in that** this device is used to generate a digital identifier of such a copy, including at least one print image, of a printed product that is embodied as a value printed product, in which the relevant copy of the printed product comprises a substrate that is formed of a paper material or of a plastic material or of a metallic material.

12. Method according to claim 11, **characterized in that** this device is used to generate a digital identifier of such a copy, including at least one print image, of a printed product that is embodied as a value printed product, in which the relevant copy of the printed product has, on its substrate, a surface printed in a recess printing process.

13. Method according to claim 10 or 11 or 12, **characterized in that** this device is used to generate a digital identifier of such a copy, including at least one print image, of a printed product that is embodied as a value printed product, in which the relevant copy of the printed product has at least one printed security feature in the form of a tactile relief and/or a security thread and/or a hologram.

14. Method according to claim 10 or 11 or 12 or 13, **characterized in that** this device is used to generate a digital identifier of such a copy, including at least one print image, of a printed product that is embodied as a value printed product, in which the relevant copy of the printed product comprises an electronic security feature in the form of an integrated security chip.

**Revendications**

1. Smartphone ou tablette, présentant un dispositif pour générer un identifiant numérique d'un exemplaire d'un produit imprimé fabriqué dans une installation de production présentant au moins une image imprimée,

    a. comprenant un système de détection optoélectronique, dans lequel le système de détection optoélectronique est réalisé de telle sorte

a. a. qu'il détecte la au moins une image imprimée de l'exemplaire concerné du produit imprimé et élabore à partir de l'image imprimée détectée une représentation constituée d'une pluralité de points d'image discrets et détermine pour chacun de ces points d'image au moins l'intensité de luminosité de celle-ci,

b. et comprenant un système coopérant avec le système de détection optoélectronique, évaluant les intensités de luminosité des points d'image, dans lequel ce système est réalisé de telle sorte

    b.a. qu'il segmente la représentation de l'image imprimée de l'exemplaire actuellement représenté du produit imprimé concerné de manière à couvrir la surface en plusieurs champs constitués respectivement de points d'image de cette représentation,

    b.b. qu'il pourvoit chacun de ces champs d'une information de position relative à l'image imprimée représentée du produit imprimé concerné,

    b.c. qu'il détermine dans chacun de ces champs de points d'image voisins constitués respectivement de points d'image de la représentation actuelle une différence dans leurs intensités de luminosité respectives déterminées par le système de détection optoélectronique et présente les différences déterminées à partir des intensités de luminosité de points d'image voisins sous forme d'une distribution de fréquences et calcule dans la distribution de fréquences respective une moyenne et un écart type relatif à la moyenne respective ainsi qu'une inclinaison et une courbure de la distribution de fréquences respective, et

    b.d. qu'il met en mémoire dans une mémoire de tous les champs de la représentation actuelle segmentée de l'image imprimée du produit imprimé concerné coopérant avec ce système l'information de position respective de chaque champ conjointement avec l'écart type respectivement calculé pour le champ respectif et l'inclinaison et la courbure en tant qu'identifiant numérique de l'exemplaire concerné du produit imprimé,

    b.e. qu'il différencie les exemplaires du produit imprimé concerné qui ont été fabriqués sur des installations de production différentes les unes des autres, sur la base de leur identifiant numérique respectif,

    b.f. qu'il associe l'exemplaire actuellement représenté du produit imprimé concerné sur la base de son identifiant à une série de production définie de ce produit imprimé, dans lequel une série de production comprend les exemplaires d'un produit imprimé défini, qui ont été produits dans ou avec la même installation de production,

b.g. qu'un système d'affichage coopérant avec le système évaluant les valeurs de luminosité des points d'image est prévu, dans lequel ce système d'affichage affiche l'identifiant numérique de l'exemplaire respectif du produit imprimé concerné produit par le système évaluant les intensités de luminosité des points d'image sous forme d'un affichage graphique et/ou alphanumérique.

2. Smartphone ou tablette selon la revendication 1, **caractérisé en ce que** le système coopérant avec le système de détection optoélectronique est réalisé de telle sorte qu'il identifie l'exemplaire actuellement représenté du produit imprimé concerné sur la base de son identifiant.

3. Smartphone ou tablette selon la revendication 1 ou 2, **caractérisé en ce que** le système coopérant avec le système de détection optoélectronique est réalisé de telle sorte qu'il catégorise l'exemplaire actuellement représenté du produit imprimé concerné sur la base de son identifiant, du fait qu'il associe l'exemplaire actuellement représenté du produit imprimé concerné à un de plusieurs groupes différents, dans lequel ces groupes sont formés à l'intérieur d'une quantité d'exemplaires de ce produit imprimé et ont été établis avant le commencement de la production de ce produit imprimé.

4. Smartphone ou tablette selon la revendication 1 ou 2 ou 3, **caractérisé en ce que** le système coopérant avec le système de détection optoélectronique est réalisé de telle sorte qu'il exécute de manière entièrement automatisée la génération de l'identifiant numérique et/ou l'association respective de l'exemplaire du produit imprimé concerné actuellement représenté.

5. Smartphone ou tablette selon la revendication 1 ou 2 ou 3 ou 4, **caractérisé en ce que** le système coopérant avec le système de détection optoélectronique est réalisé de telle sorte qu'il segmente la représentation de l'image imprimée de l'exemplaire actuellement représenté du produit imprimé concerné de manière à couvrir la surface en plusieurs champs rectangulaires de même taille constitués respectivement de points d'image de cette représentation.

6. Smartphone ou tablette selon la revendication 1 ou 2 ou 3 ou 4 ou 5, **caractérisé en ce que** le système coopérant avec le système de détection optoélectronique est réalisé de telle sorte qu'il dispose les champs voisins les uns des autres segmentant la représentation de l'image imprimée de l'exemplaire actuellement représenté du produit imprimé concerné de manière à ce qu'ils se chevauchent respectivement.

7. Smartphone ou tablette selon la revendication 1 ou 2 ou 3 ou 4 ou 5 ou 6, **caractérisé en ce que** le système coopérant avec le système de détection optoélectronique est réalisé de telle sorte qu'il représente la distribution de fréquences déterminée à partir des intensités de luminosité déterminées par le système de détection optoélectronique pour chacun des champs segmentant la représentation actuelle de l'image imprimée respectivement sous la forme d'un profil de luminosité bidimensionnel.

8. Smartphone ou tablette selon la revendication 1 ou 2 ou 3 ou 4 ou 5 ou 6 ou 7, **caractérisé en ce que** le système de détection optoélectronique est réalisé sous la forme d'un scanner ou sous la forme d'une caméra à semi-conducteur.

9. Smartphone ou tablette selon la revendication 1 ou 2 ou 3 ou 4 ou 5 ou 6 ou 7 ou 8, **caractérisé en ce que** le système coopérant avec le système de détection optoélectronique, évaluant les intensités de luminosité des points d'image est réalisé sous la forme d'une unité de calcul numérique.

10. Procédé pour l'utilisation du smartphone ou de la tablette présentant le dispositif selon la revendication 1 ou 2 ou 3 ou 4 ou 5 ou 6 ou 7 ou 8 ou 9, **caractérisé en ce que** ce dispositif est utilisé pour générer un identifiant numérique d'un exemplaire présentant au moins une image imprimée d'un produit imprimé réalisé sous la forme d'un produit imprimé de valeur sous forme d'un billet de banque ou d'une vignette d'affranchissement ou d'un timbre fiscal ou d'un document d'identité.

11. Procédé pour l'utilisation du smartphone ou de la tablette présentant le dispositif selon la revendication 1 ou 2 ou 3 ou 4 ou 5 ou 6 ou 7 ou 8 ou 9, **caractérisé en ce que** ce dispositif est utilisé pour générer un identifiant numérique d'un tel exemplaire présentant au moins une image imprimée d'un produit imprimé réalisé sous la forme d'un produit imprimé de valeur, selon lequel l'exemplaire concerné du produit imprimé comporte un substrat formé d'un matériau papier ou d'une matière plastique ou d'un matériau métallique.

12. Procédé selon la revendication 11, **caractérisé en ce que** ce dispositif est utilisé pour générer un identifiant numérique d'un tel exemplaire présentant au moins une image imprimée d'un produit imprimé réalisé sous la forme d'un produit imprimé de valeur, selon lequel l'exemplaire concerné du produit imprimé comporte sur son substrat une surface imprimée dans un procédé d'impression en taille-douce.

13. Procédé selon la revendication 10 ou 11 ou 12, **caractérisé en ce que** ce dispositif est utilisé pour générer un identifiant numérique d'un tel exemplaire présentant au moins une image imprimée d'un produit imprimé réalisé sous la forme d'un produit imprimé de valeur, selon lequel l'exemplaire concerné du produit imprimé comporte au moins une caractéristique de sécurité à technique impression sous forme d'un relief perceptible et/ou d'un fil de sécurité et/ou d'un hologramme.

14. Procédé selon la revendication 10 ou 11 ou 12 ou 13, **caractérisé en ce que** ce dispositif est utilisé pour générer un identifiant numérique d'un tel exemplaire présentant au moins une image imprimée d'un produit imprimé réalisé sous la forme d'un produit imprimé de valeur, selon lequel l'exemplaire concerné du produit imprimé comporte une caractéristique de sécurité électronique sous forme d'une puce de sécurité intégrée.

Fig. 1

EP 4 205 091 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008146262 A2
- US 20160012658 A1
- EP 2639774 A1
- US 2009074301 A1